# EUROPEAN PATENT SPECIFICATION

(11) **EP 1 166 162 B1**
(45) Date of publication and mention of the grant of the patent: **26.07.2006**
(21) Application number: 00914381.9
(22) Date of filing: 24.03.2000
(51) Int. Cl.: G02B 26/08, G01N 21/25, G01N 27/447

(54) **DEVICE AND METHOD FOR SELECTING AND RECORDING AN IMAGE**
VORRICHTUNG UND VERFAHREN ZUR AUSWAHL UND AUFNAHME EINES BILDES
PROCEDE ET DISPOSITIF DE SELECTION ET D'ENREGISTREMENT D'UNE IMAGE

(30) Priority: 24.03.1999 NL 1011664
(43) Date of publication of application: 02.01.2002
(73) Proprietor: Datascan Group B.V., 3606 AS Maarssen (NL)
(72) Inventor: KOOPMAN, Pieter, Tjerk, NL-3993 TK Houten (NL)
(74) Representative: Van den Heuvel, Henricus Theodorus
(86) International application number: PCT/NL2000/000202
(87) International publication number: WO 2000/057234

(56) References cited:
- EP-A- 0 459 214
- EP-A- 0 640 826
- GB-A- 224 240
- GB-A- 1 203 625
- US-A- 5 059 031
- US-A- 5 615 013
- US-A- 5 883 662
- PATENT ABSTRACTS OF JAPAN vol. 1997, no. 06, 30 June 1997 (1997-06-30) -& JP 09 043236 A (SHIMADZU CORP), 14 February 1997 (1997-02-14)
- PATENT ABSTRACTS OF JAPAN vol. 1999, no. 08, 30 June 1999 (1999-06-30) -& JP 11 063925 A (COPAL CO LTD), 5 March 1999 (1999-03-05)

## Description

The invention relates to a device for selecting and recording an image of an irradiated or emissive object according the preamble of claim 1. The invention also relates to a method for selecting an image to be recorded with a camera of an irradiated or emissive object.

For the analysis of DNA and RNA structures, proteins and so on use is made of camera boxes (also referred to as "imaging systems"). An object, generally in gel form such as a gel with nucleic acid or a gel with protein, is placed in such a camera box. The object is irradiated, for instance with light and preferably from the underside. It is also possible for the object, whether or not it is irradiated, to be emissive. A camera deployed above the object is placed in the correct position relative to the object to view and optionally enlarge radiation from a part of the object. It is noted with emphasis here that the part of the object to be viewed can also consist of the whole object. The positioning of the object in relation to the camera usually takes place by displacing the object holder on which the object lies in a plane perpendicular to the camera (x and y direction) until the desired object part lies below the camera. The desired image can then be recorded. A drawback of the existing camera boxes is that they are comparatively bulky and that the objects usually contain toxic substances with which an operative can come into contact during displacement of the object. A further drawback is that the object or preparation can be damaged during displacement thereof.

US patent 5,059,031 discloses a method and apparatus for high-speed optical testing of at least partially transparent objects in which a translating line of objects is fed to an inspection station. In the inspection station a source of optical radiation is located on one side of the line of transparent objects and an optical receiver is located on the opposite side of the objects. The apparatus can be provided with a rotatable mirror to reflect radiation that has passed through the object onto the receiver. The receiver is embodied by a camera that can be swiveled about an axis parallel to the translating line of the objects. Such a method and apparatus are useful for testing at high operating rates moving objects of variable length however are not useful for selecting and recording an image of a stationary object.

The present invention therefore has for its object to provide an improved method and device for selecting an image to be recorded with a camera which forms an irradiated or emissive stationary object, with which it is possible to work with minimal risk of contamination through contact with toxic substances while retaining the optical resolution.

The invention provides for this purpose a device for selecting and recording an image according claim 1. The device preferably also comprises a radiation source for irradiating the object positioned by the object holder. Because in the device according to the invention the object does not have to be displaced, the object holder is given a stationary form, which results in a simplification of the construction and therefore saves costs compared to the prior art. The mirror is rotatable round a rotation axis for the purpose of reflecting a chosen part of the image of the object to a viewing area. The camera is displaceable in the viewing area substantially parallel to the rotation axis of the rotatable mirror. A desired part of the image of the object can be selected with this device according to the invention. The control of the camera is herein simple since it has only one degree of freedom. In addition to the simple control of the camera, the mirror must also be controlled. A significant advantage of the device according to the invention is that the object does not have to be moved to place the camera in the correct position relative to an object part. The chance of contamination of a user of the device with toxic substances, such as for instance carcinogens, is hereby limited considerably. Furthermore, the danger of the preparation being damaged as a result of positioning of the camera relative to the preparation is also considerably limited. Although systems do already exist wherein the object remains stationary and the image is herein positioned by digital zooming on the desired part of the object to be selected, these have the drawback of resulting in a considerable limitation of the resolution. Another significant advantage is that it can take a relatively compact form. The construction height can be considerably smaller than in existing systems where a camera is arranged some distance above the object holder. This advantage will be further elucidated with reference to the annexed figures.

The U.S. patent 5,615,013 discloses a galvanometer and camera system to provide information from a workpiece to a camera. Mirrors mounted on the galvanometer project an image from a workpiece into the camera. Since the galvanometer moves relative to the surface of the workpiece the camera may remain fixed. The control of the galvanometer according this document is relatively complex and a substantial distance from the workpiece to the workpiece is required.

In a particular preferred embodiment the displaceable camera is rotatable round two rotation axes substantially perpendicular to each other. In a comparative example the mirror can herein be disposed in stationary position. A selection can thus be made by directing the camera at the desired part of the reflected image of the object. The required angular displacement of the camera can be determined partly subject to the distance of the camera from the mirror. By means of this simple construction the object can be viewed without loss of image quality.

The mirror is rotatable round a single rotation axis for the purpose of reflecting a chosen part of the image of the object to a viewing area. The camera is herein moreover displaceable in the viewing area substantially parallel to the rotation axis of the rotatable mirror. A desired part of the image of the object can also be selected with this preferred embodiment of the device according to the invention. The control of the camera is herein simpler than the control of the above described camera with two rotation axes since it has only one degree of freedom. In addition to simpler control of the camera, the mirror must however also be controlled in this preferred variant.

In a preferred embodiment the radiation source is disposed on the side of the object remote from the mirror. The object is thus X-rayed, which makes the device extremely suitable for analysis of DNA samples using a fluorescent medium. Use is generally made herein of a radiation source of 302 nm. This is however only one of the many possible ways in which the device according to the invention can be applied.

The driving of the rotatable mirror and/or of the camera can take place manually using for instance a screw spindle, but it is also possible to realize these displacements by means of drive means such as for instance electric motors.

In a particular preferred embodiment the device is also provided with linear guide means for guiding the camera. In the case of linear displacement of the camera it is important that the camera can be moved reciprocally in the viewing area in accurate manner, and it must moreover be possible to fix the camera at a precise position in order to record a determined image.

In another preferred embodiment the device is provided with an at least substantially radiation-sealed housing. Radiation sources with a wavelength in the order of magnitude of 302 nm can be applied in the device according to the invention, and these are harmful to the human eye. It is therefore recommended to prevent radiation originating from the radiation source from leaving the device. In addition, it is necessary to prevent ambient radiation (such as for instance ambient light) entering the housing, thereby causing the viewed image to become blurred/diminished.

The rotatable mirror can take an elongate form so that the mirror casts a strip-like selected part of the image of the object to the viewing area. The length of the rotatable mirror is herein preferably greater than the length of the object. The strip-like image can hereby originate from the whole length of the object. A selection can thus be made in one direction of the desired part of the image to be selected through the position of the mirror; in the preferred direction perpendicular thereto the selection must take place by displacing the camera. It is generally remarked that the mirrors used in the device are preferably provided with a mirror surface placed on the front side, wherein the rotation axis of the mirror preferably coincides with the mirror surface. This is to prevent diminishing and/or deformation of the image being caused by the refractive index of the coating material with which the mirror surfaces may by covered or by rotation of the mirror. It would be most obvious to give the mirrors a flat form but in order to obtain particular effects, such as for instance enlargement, it is also possible to give the mirror surfaces a curved form.

In another preferred embodiment the rotatable mirror, rotatable axis and drive means for rotation of the mirror are integrated with the camera. The mirror does not have to have an elongate form in this preferred embodiment; through displacement of the camera the mirror in any case also displaces immediately.

Another option is that in addition to the rotatable mirror at least one additional stationary mirror is disposed between the object and the camera. This enhances the construction possibilities; the camera can be placed at a position where it causes the least obstruction and it is possible to give the device an even more compact form.

It is noted that the optical axis of the image for recording preferably lies perpendicular to the recording surface of the camera. Image distortion can thus be prevented, which leads to optimally quantifiable results.

The invention moreover provides a method for selecting an image to be recorded with a camera of an irradiated or emissive object, according claim 10. The object placed in stationary position is preferably irradiated by a radiation source. It is recommended that the object be irradiated from the side of the object remote from the rotatable mirror. Using this method it is possible while retaining optical resolution to select an image of an irradiated or emissive object with a limited danger of damage to the object. It is also possible to perform this method such that working conditions are less hazardous.

In a preferred application of the method according to the invention the part of the reflected image to be viewed is selected by rotating the camera round two rotation axes substantially perpendicular to each other. In a comparative example a desired part of the image of an object reflected by means of a for instance stationary mirror can thus be selected by limited angular displacement of the camera through two degrees of freedom. Selection takes place solely by directing the camera.

In the method according to the invention for reflecting an image of an object as according to step B), the mirror is rotated round a single rotation axis such that a selected part of the image of the object is reflected by the mirror to a viewing area. The part to be viewed from the reflected image is preferably selected by displacing the camera substantially parallel to the rotation axis of the mirror in the viewing area. The desired part of the image is thus selected by rotating the mirror and displacing the camera. Although two elements have to be directed here, both have only to be displaced/rotated along one degree of freedom. The image of the object to be reflected to the viewing area can herein also be reflected by at least one stationary mirror as well as by the rotatable mirror. For the other advantages of this method reference is made to the advantages described above with reference to the device according to the invention.

The invention will be further elucidated with reference to the non-limitative embodiments shown in the following figures. Herein:
figure 1a shows a schematic side view of a device according to the invention,
figure 1b shows a side view rotated through 90° relative to figure 1a of the schematically shown device corresponding with that of figure 1a,
figure 2a shows a side view of a rotatable mirror and translatable camera such as form part of the device according to the invention, and
figure 2b shows a side view rotated through 90° of the camera and mirror as shown in figure 2a.

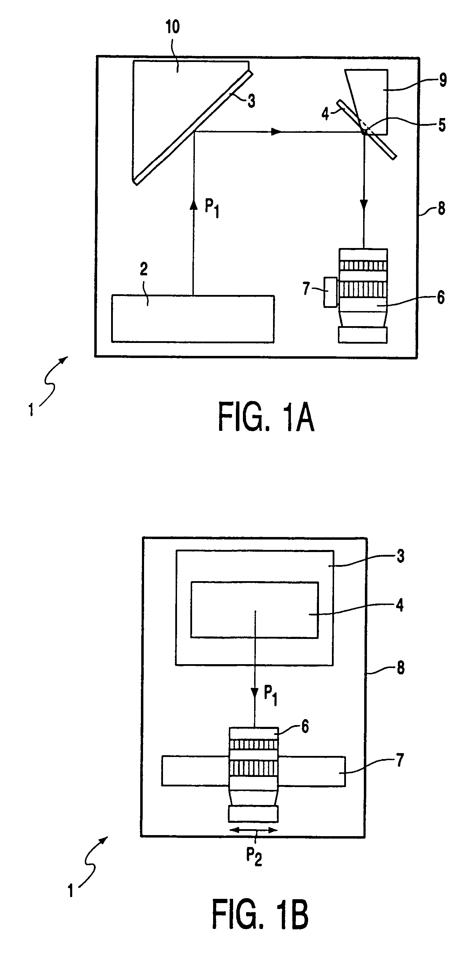

Figure 1a shows a device 1 with an object holder 2 from which light is cast as according to arrow P1. The light emitted by object holder 2 is radiated to a stationary mirror 3 by an object (not shown in this figure) placed on object holder 2. Stationary mirror 3 reflects the light to a rotatable mirror 4 which can swivel round a rotation axis 5 which coincides with the mirror surface of mirror 4. From rotatable mirror 4 a part of the light image reflects to a camera 6 which is displaceable along a guide 7 in a viewing area in a direction perpendicular to the drawing. Object holder 2, mirrors 3, 4 and camera 6 are placed in a housing 8 which prevents light emitted by object holder 2 disturbing/impeding users of device 1. The housing 8 shown schematically in this figure also forms the frame on which rotation axis 5 engages via a support 9 and to which stationary mirror 3 is connected via a support 10.

Figure 1b shows device 1 in a side view rotated through 90° which shows more clearly that camera 6 is displaceable as according to arrow P2 along guide 7. By adjusting the angular position of rotatable mirror 4 and the position of camera 6 on guide 7 an image forming a part of an object located on object holder 2 can be selected without displacing the object on object holder 2.

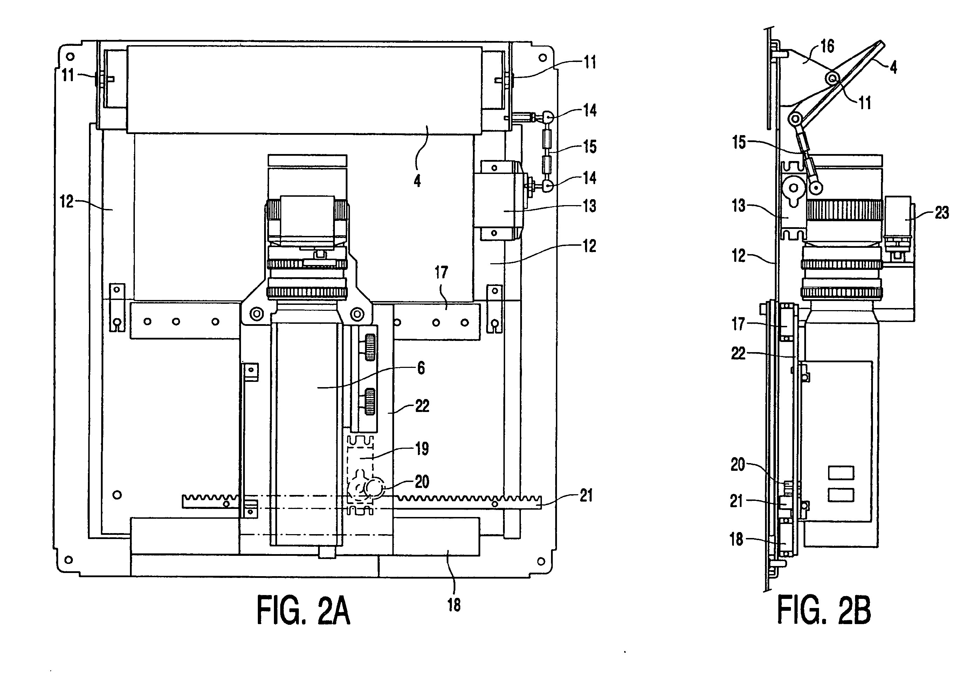

Figure 2a shows a more detailed side view of device 1 in which rotatable mirror 4 is suspended for rotation round pins 11 in a frame 12. Also fixed to frame 12 is an electric motor 13 which engages on rotatable mirror 4 via ball hinges 14 and a drive rod 15. It is thus possible by operating servomotor 13 to vary the angular position of rotatable mirror 4. Figure 2b shows clearly that rotatable mirror 4 is likewise integrated with frame 12 via a support 16.

Camera 6 is connected for translation to frame 12 by means of an upper guide 17 and a lower guide 18. In order to vary the position of camera 6 relative to frame 12 there is provided a servomotor 19 which drives a toothed wheel 20. This toothed wheel 20 engages on a rack 21 which is connected in stationary manner to frame 12. Servomotor 19 is fixed to a plate 22 which also bears camera 6. It is thus possible by operating servomotor 19 to displace camera 6 along guides 17, 18 and fix it in a desired position.

The description of figure 2b is analogous to that of figure 2a. This figure shows in addition a third servomotor 23 for optical zooming of camera 6. It is otherwise noted that device 1 can be embodied with diverse types of camera; digital cameras are usually applied in practice for this purpose.

Although the invention is elucidated with reference to only a few embodiments, it will be apparent to all that the invention is by no means limited to the described and shown embodiments. It will thus be apparent that the device can be applied to record diverse images. Examples hereof are the analysis of DNA and RNA structures, DNA chip technology as well as various other applications of image acquisition. Many more variations in application and construction are possible for the skilled person within the scope of the invention as defined in the appended claims.

## Claims

1. Device (1) for selecting and recording an image of an irradiated or emissive object, comprising:
- an object holder (2) for positioning the object,
- a mirror (4) for reflecting an image of the object, and
- a displaceable camera (6) for selecting a part of the image from the reflected image of the object, wherein
the object holder (2) is a stationary part of the device (1),
the camera (6) is displaceable in a viewing area, in which an image of the irradiated or emissive object is reflected by the mirror (4) which mirror (4) lies on the optical axis of the camera (6), and wherein the device (1) comprises means for rotating the mirror (4) about a rotation axis (5) which is perpendicular to the optical axis of the camera (6),
the device (1) further comprising means for displacing the camera (6) substantially parallel to the rotation axis (5) of the rotatable mirror (4).

2. Device (1) as claimed in claim 1, **characterised in that** the displaceable camera (6) is rotatable round two rotation axes substantially perpendicular to each other.

3. Device (1) as claimed in any of the foregoing claims, **characterised in that** the device (1) also comprises a radiation source for irradiating the object positioned by the object holder.

4. Device (1) as claimed in any of the foregoing claims, **characterised in that** the device (1) also comprises drive means (13, 14, 15) for rotating the mirror (4).

5. Device (1) as claimed in any of the foregoing claims, **characterised in that** the device (1) also comprises drive means (19, 20, 21) for displacing the camera (6).

6. Device (1) as claimed in any of the foregoing claims, **characterised in that** the device (1) also comprises substantially linear guide means (7, 17, 18) for guiding the camera (6).

7. Device (1) as claimed in any of the foregoing claims, **characterised in that** the device (1) is provided with an at least substantially radiation-sealed housing (8).

8. Device (1) as claimed in any of the foregoing claims, **characterised in that** the rotatable mirror (4) has an elongate form.

9. Device (1) as claimed in any of the foregoing claims, **characterised in that** at least one stationary mirror (3) is disposed between the object and the camera (6) in addition to the rotatable mirror (4).

10. Method for selecting an image to be recorded with a camera (6) of an irradiated or emissive object, by the steps of:
A) placing the object in stationary position,
B) reflecting an image of an object with a rotatable mirror (4) that lies on the optical axis of a displaceables camera (6), the rotation taking place about a rotation axis (5) which is perpendicular to the optical axis of the camera (6), and
C) selecting with the displaceable camera (6) the object to be viewed from the reflected image,
wherein the camera (6) is displaced substantially parallel to the rotation axis (5) of the rotatable mirror (4) in a viewing area, in which an image of the irradiated or emissive object is reflected by the mirror (4).

11. Method as claimed in claim 10, **characterised in that** the part of the reflected image to be viewed is selected by rotating the camera (6) round two rotation axes substantially perpendicular to each other.

12. Method as claimed in claim 10 or 11, **characterised in that** the part of the image of the object to be reflected to the viewing area is also reflected by at least one stationary mirror (3) as well as by the rotatable mirror (4).

## Patentansprüche

1. Vorrichtung (1) zur Auswahl und Aufnahme eines Bildes eines durchstrahlten oder emittierenden Objekts, das umfasst:
- einen Objekthalter (2) zum Positionieren des Objekts,
- einen Spiegel (4) zum Reflektieren eines Bildes des Objekts und
- eine verschiebbare Kamera (6) zur Auswahl eines Teils des Bildes des reflektierten Bildes des Objekts, worin
der Objekthalter (2) ein stationärer Teil der Vorrichtung (1) ist,
die Kamera (6) in einer Betrachtungsfläche verschiebbar ist, in dem ein Bild des durchstrahlten oder emittierenden Objekts von dem Spiegel (4) reflektiert wird, welcher Spiegel (4) auf der optischen Achse der Kamera (6) liegt, und worin die Vorrichtung (1) Mittel zum Schwenken des Spiegels (4) um eine Drehachse (5), die senkrecht zu der optischen Achse der Kamera (6) liegt, umfasst, und die Vorrichtung (1) ferner Mittel zum Verschieben der Kamera (6) im Wesentlichen parallel zur Drehachse (5) des schwenkbaren Spiegels (4) umfasst.

2. Vorrichtung (1) nach Anspruch 1, **dadurch gekennzeichnet, dass** die verschiebbare Kamera (6) um zwei Drehachsen, die im Wesentlichen senkrecht zueinander stehen, schwenkbar ist.

3. Vorrichtung (1) nach einem der vorhergehenden Ansprüche, **dadurch gekennzeichnet, dass** die Vorrichtung (1) auch eine Strahlungsquelle zum Durchstrahlen des von dem Objekthalter positionierten Objekts umfasst.

4. Vorrichtung (1) nach einem der vorhergehenden Ansprüche, **dadurch gekennzeichnet, dass** die Vorrichtung (1) auch Antriebsmittel (13, 14, 15) zum Schwenken des Spiegels (4) umfasst.

5. Vorrichtung (1) nach einem der vorhergehenden Ansprüche, **dadurch gekennzeichnet, dass** die Vorrichtung (1) auch Antriebsmittel (19, 20, 21) zum Verschieben der Kamera (6) umfasst.

6. Vorrichtung (1) nach einem der vorhergehenden Ansprüche, **dadurch gekennzeichnet, dass** die Vorrichtung (1) auch weitgehend lineare Führungsmittel (7, 17, 18) zum Führen der Kamera (6) umfasst.

7. Vorrichtung (1) nach einem der vorhergehenden Ansprüche, **dadurch gekennzeichnet, dass** die Vorrichtung (1) mit einem zumindest weitgehend strahlungsdichten Gehäuse (8) versehen ist.

8. Vorrichtung (1) nach einem der vorhergehenden Ansprüche, **dadurch gekennzeichnet, dass** der schwenkbare Spiegel (4) eine längliche Form hat.

9. Vorrichtung (1) nach einem der vorhergehenden Ansprüche, **dadurch gekennzeichnet, dass** zumindest ein stationärer Spiegel (3) zwischen dem Objekt und der Kamera (6) zusätzlich zu dem schwenkbaren Spiegel (4) angeordnet ist.

10. Verfahren zur Auswahl eines Bildes zum Aufnehmen mit einer Kamera (6) eines durchstrahlten oder emittierenden Objekts mit den folgenden Schritten:
A) Legen des Objekts in eine ortsfeste Position,
B) Reflektieren eines Bildes eines Objekts mit einem schwenkbaren Spiegel (4), der in der optischen Achse einer verschiebbaren Kamera (6) liegt, wobei das Schwenken um eine Drehachse (5), die senkrecht zur optischen Achse der Kamera (6) liegt, stattfindet, und
C) mit der verschiebbaren Kamera (6) Auswählen des Objekts, das von dem reflektierten Bild gesehen werden kann,
worin die Kamera (6) im Wesentlichen parallel zur Drehachse (5) des schwenkbaren Spiegels (4) in einer Betrachtungsfläche verschoben wird, in dem ein Bild des durchstrahlten oder emittierenden Objekts von dem Spiegel (4) reflektiert wird.

11. Verfahren nach Anspruch 10, **dadurch gekennzeichnet, dass** der Teil des reflektierten Bildes, das betrachtet werden soll, durch Schwenken der Kamera (6) um zwei Drehachsen, die im Wesentlichen senkrecht zueinander angeordnet sind, ausgewählt wird.

12. Verfahren nach Anspruch 10 oder 11, **dadurch gekennzeichnet, dass** der Teil des Bildes des Objekts, der zu der Betrachtungsfläche reflektiert wird, auch von mindestens einem stationären Spiegel (3) sowie von dem schwenkbaren Spiegel (4) reflektiert wird.

## Revendications

1. Dispositif (1) pour sélectionner et enregistrer une image d'un objet irradié ou émissif, comprenant :
- un porte-objet (2) pour positionner l'objet ;
- un miroir (4) pour réfléchir une image de l'objet, et
- une caméra déplaçable (6) pour sélectionner une partie de l'image à partir de l'image réfléchie de l'objet, sachant que :
le porte-objet (2) est un élément fixe du dispositif (1),
la caméra (6) est déplaçable dans une zone de visualisation dans laquelle une image de l'objet irradié ou émissif est réfléchie par le miroir (4), lequel miroir (4) se trouve sur l'axe optique de la caméra (6) et sachant que le dispositif (1) comprend des moyens pour faire tourner le miroir (4) autour d'un axe de rotation (5) qui est perpendiculaire à l'axe optique de la caméra (6),
le dispositif (1) comprenant en outre des moyens pour déplacer la caméra (6) de façon sensiblement parallèle à l'axe de rotation (5) du miroir rotatif (4).

2. Dispositif (1) selon la revendication 1, **caractérisé en ce que** la caméra déplaçable (6) peut tourner autour de deux axes de rotation sensiblement perpendiculaires l'un à l'autre.

3. Dispositif (1) selon l'une quelconque des revendications précédentes, **caractérisé en ce que** le dispositif (1) comprend aussi une source de radiations pour irradier l'objet positionné par le porte-objet.

4. Dispositif (1) selon l'une quelconque des revendications précédentes, **caractérisé en ce que** le dispositif (1) comprend aussi des moyens d'entraînement (13, 14, 15) pour faire tourner le miroir (4).

5. Dispositif (1) selon l'une quelconque des revendications précédentes, **caractérisé en ce que** le dispositif (1) comprend aussi des moyens d'entraînement (19, 20, 21) pour déplacer la caméra (6).

6. Dispositif (1) selon l'une quelconque des revendications précédentes, **caractérisé en ce que** le dispositif (1) comprend aussi des moyens de guidage sensiblement linéaire (7, 17, 18) pour guider la caméra (6).

7. Dispositif (1) selon l'une quelconque des revendications précédentes, **caractérisé en ce que** le dispositif (1) est pourvu d'un logement (8) au moins sensiblement étanche aux radiations.

8. Dispositif (1) selon l'une quelconque des revendications précédentes, **caractérisé en ce que** le miroir rotatif (4) a une forme allongée.

9. Dispositif (1) selon l'une quelconque des revendications précédentes, **caractérisé en ce que** au moins un miroir fixe (3) est disposé entre l'objet et la caméra (6) en plus du miroir rotatif (4).

10. Procédé pour sélectionner une image à enregistrer avec une caméra (6) d'un objet irradié ou émissif, au moyen des étapes consistant à :
A) placer l'objet dans une position stationnaire ;
B) réfléchir une image d'un objet avec un miroir rotatif (4) qui se trouve sur l'axe optique d'une caméra déplaçable (6), la rotation ayant lieu autour d'un axe de rotation (5) qui est perpendiculaire à l'axe optique de la caméra (6), et
C) sélectionner avec la caméra déplaçable (6) l'objet à visualiser à partir de l'image réfléchie, sachant que la caméra (6) est déplacée de façon sensiblement parallèle à l'axe de rotation (5) du miroir rotatif (4) dans une zone de visualisation dans laquelle une image de l'objet irradié ou émissif est réfléchie par le miroir (4).

11. Procédé selon la revendication 10, **caractérisé en ce que** la partie de l'image réfléchie à visualiser est sélectionnée en faisant tourner la caméra (6) autour de deux axes de rotation sensiblement perpendiculaires l'un à l'autre.

12. Procédé selon la revendication 10 ou 11, **caractérisé en ce que** la partie de l'image de l'objet à réfléchir vers la zone de visualisation est aussi réfléchie par au moins un miroir fixe (3) ainsi que par le miroir rotatif (4).
